# FASCICULE DE BREVET EUROPEEN

(11) **EP 0 611 671 B1**
(45) Date de publication et mention de la délivrance du brevet: **11.10.1995**
(21) Numéro de dépôt: 93403201.2
(22) Date de dépôt: 28.12.1993
(51) Int. Cl.: B60G 17/04

(54) **Dispositif de commande automatique et manuelle de la hauteur dans un véhicule automobile à suspension hydropneumatique**
Steuergerät für manuelle und automatische Regelung der Fahrzeughöhe in einem Kraftfahrzeug mit hydropneumatischer Aufhängung
Automatically and manually operated height corrector device in a motor car equiped with hydropneumatic suspension

(30) Priorité: 19.02.1993 FR 9301949
(43) Date de publication de la demande: 24.08.1994
(73) Titulaire: AUTOMOBILES PEUGEOT, 75116 Paris (FR); AUTOMOBILES CITROEN, 92200 Neuilly-sur-Seine (FR)
(72) Inventeur: Deroche, Gabriel, F-93250 Villemomble (FR)
(74) Mandataire: Durand, Yves Armand Louis

(56) Documents cités:
- EP-A- 0 256 897
- EP-A- 0 300 869
- EP-A- 0 311 465
- EP-A- 0 493 152
- FR-A- 2 584 659

## Description

La présente invention concerne un dispositif de commande automatique et manuelle de la hauteur dans un véhicule automobile.

On connaît des dispositifs pour commander automatiquement et manuellement la hauteur des essieux dans un véhicule automobile, constitués, pour chaque essieu, d'une part, d'un correcteur de hauteur hydraulique à tiroir et d'un moyen ce détection de la hauteur de l'essieu agissant sur le tiroir par l'intermédiaire de premiers moyens élastiques pour maintenir automatiquement l'essieu du véhicule à sa hauteur de référence, et d'autre part, d'un levier de manoeuvre relié au tiroir par l'intermédiaire de deuxièmes moyens élastiques permettant de faire varier manuellement cette hauteur de manière à maintenir le véhicule à une hauteur différente de la hauteur de référence. Un de ces dispositifs est montré, par exemple, dans le document EP-A-256 897. Or, ces dispositifs connus présentent un certain nombre d'inconvénients qui tiennent principalement d'une part, à ce que la hauteur du véhicule maintenue automatiquement n'est pas suffisamment constante et précise lors des variations de charge du véhicule, et à ce que d'autre part, la variation manuelle de cette hauteur requiert du conducteur un effort important.

La présente invention résout ces problèmes et propose un dispositif de commande manuelle et automatique de la hauteur dans un véhicule automobile, permettant de maintenir automatiquement le véhicule à une hauteur de référence précise et constante particulièrement lors des variations de charge, tout en réduisant considérablement l'effort de manoeuvre requis pour modifier manuellement cette hauteur, le dispositif présentant en outre une grande compacité facilitant considérablement son implantation et son adaptation sur différents véhicules.

A cet effet la présente invention a pour objet un dispositif de commande de hauteur automatique et manuelle pour un essieu de véhicule automobile à suspension hydropneumatique ou analogue, du genre comprenant un correcteur de hauteur hydraulique à tiroir, des moyens de détection de la hauteur de l'essieu agissant sur le tiroir par l'intermédiaire de premiers moyens élastiques, ces moyens de détection constituant la commande automatique précitée, et un levier de manoeuvre agissant sur le tiroir par l'intermédiaire de deuxièmes moyens élastiques, ce levier constituant la commande manuelle précitée, ce dispositif étant caractérisé en ce que les premiers et deuxièmes moyens élastiques sont des moyens élastiques précontraints.

Suivant une réalisation particulière, les moyens élastiques précités sont déterminés pour que les efforts qu'ils exercent sur le tiroir s'équilibrent lorsque les seconds ont été déformés suite au passage du levier de manoeuvre de la position de référence à la position intermédiaire et les premiers suite à l'action correspondante des moyens de détection.

Suivant une caractéristique particulière, les premiers et seconds moyens élastiques sont respectivement deux ressorts hélicoïdaux à extrémités croisées.

Suivant une autre caractéristique, les ressorts sont précontraints de façon que les deux extrémités de chaque ressort tendent à se rapprocher l'une de l'autre.

Les deux ressorts précités sont montés respectivement sur deux leviers pivotant autour de l'axe de leur partie hélicoïdale, leurs extrémités étant en appui sur des rebords prévus sur les leviers correspondants et les deux commandes respectivement automatique et manuelle agissant directement ou indirectement sur ces leviers.

Suivant une autre caractéristique, les deux extrémités de l'un au moins des ressorts précités sont également en appui sur deux rebords prévus sur un embout solidaire du tiroir du correcteur.

L'une au moins des commandes manuelle et automatique agit sur une pièce présentant deux rebords sur lesquels s'appuient les extrémités du ressort correspondant.

Suivant une autre caractéristique, la pièce sur laquelle agit la commande manuelle se trouve à l'extrémité d'une tige de commande actionnée par le levier de manoeuvre.

Suivant une autre caractéristique, l'un au moins des leviers de commande manuelle et automatique comporte un doigt pénétrant dans une échancrure ménagée sur l'embout du tiroir.

Le levier de commande manuelle comportant le doigt précité, ladite échancrure a une longueur suffisante pour que la commande automatique ne soit pas gênée par la commande manuelle lorsque celle-ci est dans la position correspondant à la hauteur de référence du véhicule.

Suivant une autre caractéristique, les rebords sur lesquels s'appuient les extrémités du ressort de la commande automatique se trouvent de part et d'autre de ladite échancrure.

On notera également que les ensembles constitués par chaque ressort et son levier associé sont disposés perpendiculairement l'un à l'autre.

Avantageusement, le levier de manoeuvre comprend une tige montée pivotante sur un support présentant des échancrures, ladite tige de commande étant fixée à l'une des extrémités de cette tige et s'étendant perpendiculairement à son axe de rotation, une poignée montée coulissante à l'autre extrémité de cette tige, et des moyens de rappel de la poignée vers le fond des échancrures.

Mais d'autres avantages et caractéristiques de l'invention apparaîtront mieux dans la description détaillée qui suit et se réfère aux dessins annexés donnés uniquement à titre d'exemple et dans lesquels:
La figure 1 est une vue de face du dispositif de commande automatique et manuelle de hauteur de l'invention, comprenant principalement un mécanisme de commande avant et un levier de manoeuvre.
La figure 2 est une vue de l'arrière du mécanisme avant de la figure 1.
La figure 3 est une vue de dessus du même mécanisme.
La figure 4 est une vue partielle d'un mécanisme de commande de hauteur arrière.
La figure 5 est une vue en coupe axiale du levier de manoeuvre de la figure 1.

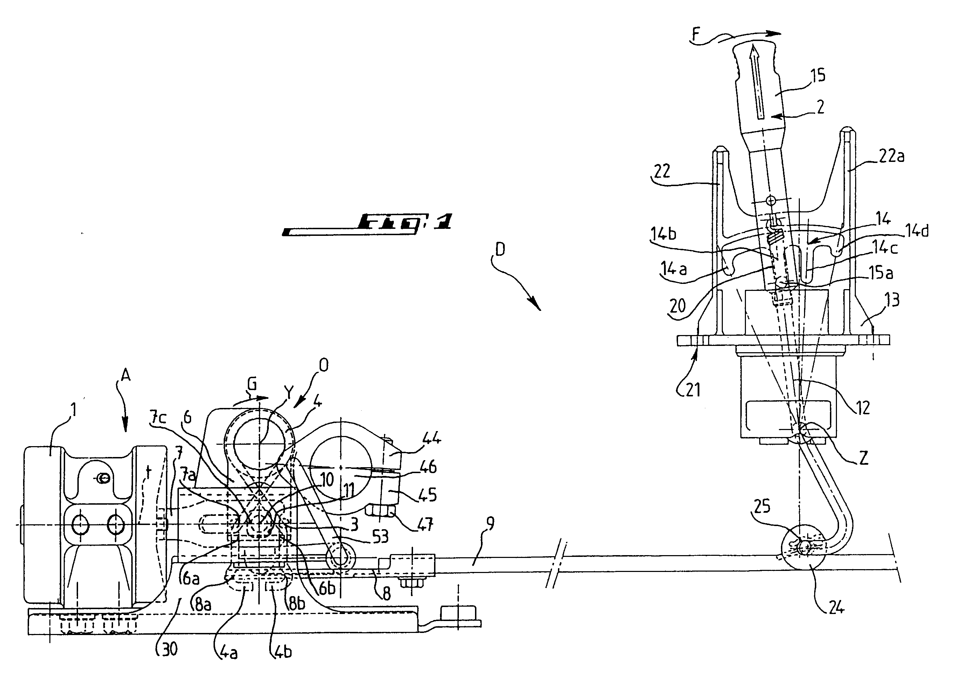

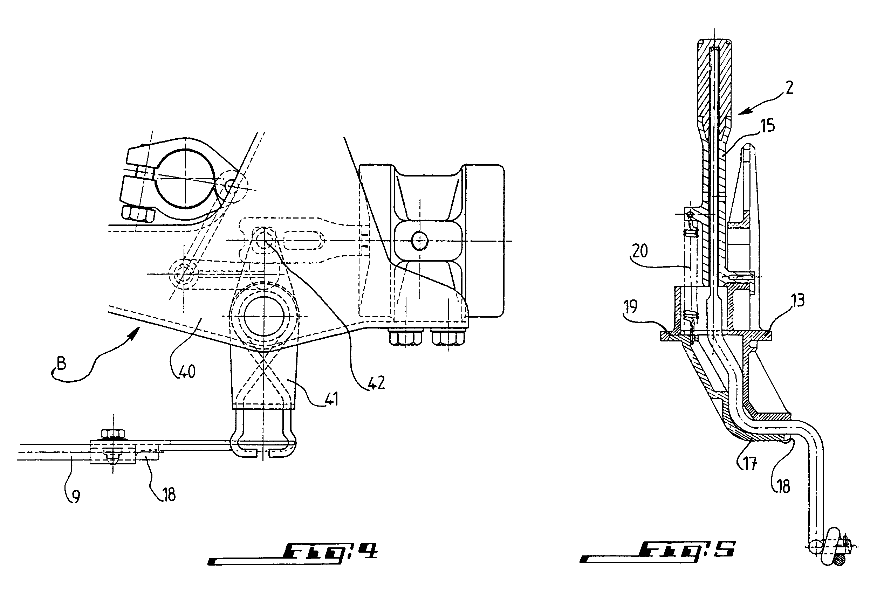

Sur la figure 1, on voit un dispositif de commande automatique et manuelle D conforme à l'invention, comprenant un mécanisme de commande automatique et manuelle A, monté sur l'essieu avant (non visible) d'un véhicule automobile, et un levier de commande manuelle ou levier de manoeuvre 2 relié au mécanisme précité A par l'intermédiaire d'une tringle 9. Ce levier de commande manuelle 2 est constitué par un levier (ou tige 12) monté pivotant autour d'un axe Z perpendiculaire à la tringle précitée 9 entre un support 13 et un palier 17 visibles sur la figure 5. Le support 13 et le palier sont assemblés à leurs parties inférieures par des crochets 18, à leurs parties supérieures par un clippage 19, par l'intermédiaire d'un ressort 20, puis par la fixation 21 de l'ensemble sur la caisse du véhicule, après positionnement de l'ensemble dans l'ouverture de la console grâce aux cornes 22, 22a.

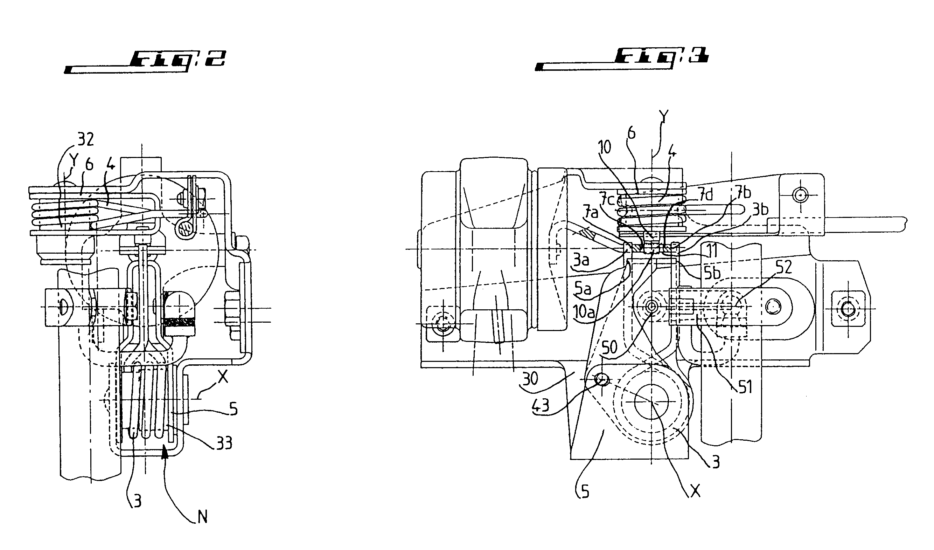

Une poignée 15 est montée coulissante autour de la partie supérieure de la tige 12 et comporte un ergot 15a rappelé par le ressort 20 dans le fond de différents crans 14 prévus dans le support, en fonction de l'angle de rotation de la tige 12. Ainsi, après soulèvement de la poignée 15, la course angulaire du levier 12 engendre un déplacement longitudinal correspondant de la tringle 9 qui sera déterminé en fonction des crans 14 sélectionnés. Ces crans 14 sont au nombre de quatre 14a, 14b, 14c, 14d et correspondent respectivement de gauche à droite, à une position basse, à une position de référence, à une position intermédiaire, et à une position haute du véhicule automobile. On notera également que le levier 12 est fixé de manière articulée à la tringle 9 précitée par l'intermédiaire d'une boucle 24 montée sur la tringle 9 et maintenue sur le levier 12 par une épingle 25. Cette tringle est en effet reliée à l'avant au mécanisme de commande automatique et manuelle avant A, visible sur la figure 1, par un embout 8, et à l'arrière, au mécanisme de commande automatique et manuelle arrière B, non visible sur la figure 1 mais visible sur la figure 4, par l'intermédiaire d'un autre embout 18, la position longitudinale desdits embouts 8, 18 étant réglable pour compenser les tolérances de longueur de la caisse du véhicule.

La partie du dispositif de l'invention permettant de commander manuellement la hauteur d'un véhicule automobile va être décrite ci-après à l'aide des figures 1, 2 et 3. On voit sur ces figures, qu'un levier dit "manuel" 6 est monté pivotant dans un support 30 autour d'un axe Y. Un ressort hélicoïdal précontraint 4 à extrémités croisées 4a, 4b, est monté autour d'une bague 32 axée sur l'axe précité Y. Les deux branches du ressort 4 sont respectivement en appui sur deux rebords 6a, 6b prévus sur le levier 6, alors que ses deux extrémités opposées 4a, 4b sont respectivement en appui contre deux rebords 8a, 8b appartenant à l'embout 8 relié à la tringle 9. Le ressort est monté en précontrainte en même temps sur l'embout 8 et le levier 6, la précontrainte étant supérieure sur l'embout de façon à éviter les bruits. Ce levier 6 comporte un doigt 10 surmonté d'une rotule 10a destinée à venir en contact, après rattrapage d'une course perdue dont la fonction sera donnée ultérieurement, avec les bords 7c, 7d d'une ouverture 11 ménagée dans un embout 7 solidaire du tiroir t du correcteur 1. Ainsi, les mouvements du levier de manoeuvre 2 sont transmis au ressort 4 par l'intermédiaire de la tringle 9, lequel ressort 4 entraîne le levier 6 déplaçant l'embout 7 solidaire du tiroir (t).

En se référant plus particulièrement aux figures 2 et 3, on voit que la partie du dispositif assurant la commande automatique de la hauteur du véhicule comprend un levier dit "automatique" 5 monté pivotant dans le support 30 autour d'un axe X solidaire de ce support 30, un ressort hélicoïdal 3 à branches croisées dit "ressort automatique", précontraint et centré sur une bague 33 axée sur l'axe X, dont les deux branches 3a, 3b sont en appui respectivement contre deux rebords 5a, 5b prévus sur le levier précité 5. Les deux extrémités croisées 3a, 3b dudit ressort 3 sont également en appui contre deux rebords 7a, 7b prévus sur l'embout 7 du correcteur précité 1. Le levier automatique 5 comporte une rotule 50 reliée de façon articulée à une biellette 51 reliée de la même façon à une autre rotule 52 solidaire de deux demi-colliers 44, 45 enserrant la barre anti-dévers 46 du véhicule par l'intermédiaire d'un levier intermédiaire 53 (figure 1).

Ainsi, en fonctionnement, les deux demi-colliers 44, 45 serrés sur la barre anti-devers 46 transmettent la variation de la hauteur de l'essieu avant au levier 5 par l'intermédiaire de la biellette 51, du levier intermédiaire 53 et des rotules 51, 52, lequel levier 5 est entraîné en rotation autour de son axe X et entraîne dans son mouvement le ressort automatique 3 en précontrainte sur le levier 5, lequel ressort 3 prend réaction avec un très léger jeu sur l'embout 7 du correcteur 1 et le déplace longitudinalement de façon à ouvrir à l'admission ou à l'échappement le circuit de suspension.

On décrira ci-après le réglage de la valeur de la hauteur de référence (ou hauteur route) à laquelle le dispositif de commande automatique va maintenir le véhicule. Le coulissement du tiroir t du correcteur 1 est préalablement empêché par une vis engagée dans l'un des trous d'écoulement, de façon que le tiroir soit immobilisé au milieu de sa position fermée. Puis la rotation du levier automatique 5 est bloquée grâce à une pige à rattrapage de jeu 43 solidarisant le levier 5 et le support 30. Ces deux opérations déterminent une position du correcteur 1 par rapport au support 30, le correcteur étant fixé dans cette position sur le support. Une fois ce correcteur fixé, la vis de blocage du tiroir peut alors être retirée et le mécanisme A fixé sur l'essieu du véhicule. La vis 47 de serrage des deux demi-colliers 44, 45 peut ainsi être vissée de façon à enserrer les deux demi-colliers sur la barre anti-dévers 46, sans risque de faux mouvements soit du tiroir t, soit du ressort 3, soit des demi-colliers 44, 45, ce qui permet d'assurer une hauteur référence précise. Le blocage étant réalisé, la pige 43 peut être retirée. Pendant toutes ces opérations, au cours desquelles le véhicule peut être suspendu, la barre anti-dévers est à une position prédéterminée pour avoir la bonne hauteur lorsque le véhicule repose au sol.

Le fonctionnement automatique du dispositif va être décrit ci-après en référence aux figures.

Lorsque le véhicule est à sa hauteur de référence, l'ensemble élastique constitué du levier 5 et du ressort 3 positionne le tiroir t en position centrale, correspondant à la fermeture du circuit de suspension. Lorsqu'il se produit une modification de charge du véhicule, la hauteur du véhicule s'éloigne de la hauteur de référence. Il en résulte un mouvement de la barre anti-devers 46 entraînant le levier 5 en rotation autour de son axe X. Ce mouvement de rotation du levier 5 entraîne un mouvement de rotation correspondant de l'une 3a, 3b des branches du ressort 3. Or, les deux branches ayant tendance à se rapprocher l'une de l'autre, il en résulte un déplacement dans le même sens de l'autre des branches du ressort, laquelle branche, en appui sur l'embout du correcteur 1, entraîne ce dernier en translation dans le sens de déplacement du levier 5 (et inversement si le mouvement de la barre anti-dévers entraîne une rotation du levier automatique dans le sens opposé). Le mouvement du tiroir ouvre le circuit de suspension de façon que le véhicule reprenne sa hauteur de référence, ce qui permet à l'ensemble élastique de ramener le tiroir en position fermée.

Le ressort a pour but d'absorber les variations de hauteur en dynamique (battements de roue), le coulissement du tiroir étant temporisé. La précontrainte de ce ressort lui permet d'exercer une force relativement importante sur le tiroir dès le moindre écart par rapport à la hauteur de référence, ce qui assure une grande précision.

On décrira ci-après le fonctionnement manuel du dispositif de l'invention en référence aux figures. Lorsqu'il est nécessaire de modifier manuellement la hauteur du véhicule, le levier de manoeuvre 2 est entraîné en rotation dans le sens de la flèche F sur la figure 1, jusqu'à ce que l'ergot 15a de la poignée 15 se trouve en regard du cran dit intermédiaire 14c.

La poignée 15 est alors relâchée, le ressort 20 rappelant ledit ergot 15a au fond du cran 14c. Ce déplacement du levier 2 entraîne un déplacement longitudinal correspondant dans le sens opposé de la tringle 9. Ce mouvement provoque un déplacement correspondant de l'une 4a des branches 4a, 4b du ressort 4 en appui sur l'embout 8. Ce mouvement engendre le déplacement dans la même direction de l'autre 4b des branches 4a, 4b, entraînant le levier 5 en rotation suivant la flèche G. Lors de ce déplacement du levier, sa rotule associée 10a vient en contact avec le bord 7c de l'embout 7 de façon à exercer un effort sur cet embout 7. Ainsi, lorsque l'on amène la poignée 15 dans le cran 14c, on agit sur le ressort 4 de la valeur de la course intermédiaire, la première partie de cette course servant au rattrapage d'une course perdue (cette course perdue ayant pour but de permettre au système de fonctionner en mode automatique sans être perturbé par la commande manuelle). La deuxième partie de cette course permet au ressort manuel 4 d'engendrer sur l'embout 7 un effort supérieur à sa précontrainte (par serrage des spires du ressort 4 sur sa bague lors de l'écartement des deux branches, afin d'augmenter la raideur de ce dernier juste avant que le véhicule atteigne la hauteur intermédiaire). Ce nouvel effort supérieur à la valeur de la précontrainte du ressort automatique 3 pousse le tiroir t, ce qui ouvre le circuit en position d'admission. La voiture monte, la barre anti-dévers pivote et actionne le levier 53 qui fait pivoter, par l'intermédiaire de la biellette 51, le levier automatique 5. Ce mouvement permet au ressort automatique 3 de prendre de la charge par rapport à sa précontrainte initiale, jusqu'à ce que ce nouvel effort s'équilibre avec le nouvel effort du ressort manuel 4. La hauteur du véhicule se stabilise alors à cette valeur intermédiaire.

On voit donc que pour obtenir une hauteur intermédiaire, on fait varier manuellement au moyen d'un second élément élastique (O) en précontrainte, l'équilibre du premier ensemble élastique (N). Après le réglage de la hauteur à la valeur intermédiaire, le dispositif fonctionne en mode automatique comme précédemment décrit, la hauteur de référence correspondant maintenant à la hauteur intermédiaire.

Lorsque l'opérateur souhaitera amener le véhicule à une hauteur plus élevée que la hauteur intermédiaire dite haute, ou à une hauteur dite basse, le levier de manoeuvre 2 sera entraîné en rotation dans un sens ou dans l'autre en fonction de la hauteur sélectionnée de façon à amener l'ergot 15a de la poignée 15 dans le cran correspondant sélectionné 14d ou 14a. Dans ce cas, le déplacement de la tringle 9 est supérieur à celui réalisé lors du réglage de la hauteur à une valeur intermédiaire, et le fonctionnement du dispositif est identique à celui précédemment décrit, à ceci près que le nouvel effort du ressort manuel 4 sera toujours supérieur (par serrage des spires du ressort 4 sur sa bague associée afin d'augmenter la raideur dès que la hauteur du véhicule dépasse la hauteur intermédiaire pour la position haute, et dès que le véhicule s'est affaissé d'une valeur identique pour la position basse) au nouvel effort maximum exercé par le ressort automatique 3 (compte-tenu de la moindre raideur de ce dernier). Pour ces hauteurs extrêmes basse et haute, la force supérieure du deuxième élément élastique ne permet pas de trouver un nouvel équilibre avec le premier élément élastique. En conséquence, le tiroir reste en butée soit dans la position dite d'ouverture échappement, soit dans la position dite d'ouverture admission. On notera que bien évidemment, les rapports d'efforts pris en compte dans les modes dits "intermédiaire", "bas", et "haut" tiennent compte des rapports des bras de levier. La figure 4 montre le mécanisme arrière B qui ne diffère du mécanisme avant A que par le support 40 et le levier de commande manuelle 41 sur lequel la rotule 42 est inversée par rapport à l'avant de manière à inverser les mouvements.

On a donc réalisé, grâce à l'invention, un dispositif de commande automatique et manuelle de la hauteur dans un véhicule automobile, permettant d'obtenir une hauteur de véhicule particulièrement précise, tout particulièrement en mode automatique, ceci étant dû au fait que le moyen élastique reliant le levier automatique au tiroir est précontraint. L'utilisation d'un ressort précontraint pour la commande manuelle de la hauteur augmente également la précision de la hauteur réglée manuellement mais, principalement, réduit considérablement l'effort de manoeuvre nécessaire pour la manipulation du levier de commande manuelle, la précontrainte du ressort autorisant une plus grande démultiplication et une plus grande flexibilité du ressort. Ce dispositif permet également d'obtenir directement, lors du réglage sur la chaîne d'assemblage, une hauteur précise, ceci grâce à la possibilité de verrouiller le levier automatique lors du blocage de la prise de signal sur la barre anti-dévers.

Le principe de l'invention permet donc la réalisation d'un petit sous ensemble homogène, qui peut être préréglé, ce qui facilite le montage final sur la chaîne d'assemblage, afin d'obtenir directement, sans aucun réglage ultérieur, une hauteur de véhicule précise. On remarque également que la compacité de ce dispositif facilite également son implantation et lui confère une grande facilité d'adaptation sur différents véhicules.

## Revendications

1. Dispositif de commande de hauteur automatique et manuelle pour un essieu de véhicule automobile à suspension hydropneumatique ou analogue, du genre comprenant un correcteur de hauteur hydraulique (1) à tiroir (t), des moyens de détection de la hauteur de l'essieu agissant sur le tiroir par l'intermédiaire de premiers moyens élastiques (N), ces moyens de détection constituant la commande automatique précitée, et un levier de manoeuvre (2) agissant sur le tiroir par l'intermédiaire de deuxièmes moyens élastiques (O), ce levier constituant la commande manuelle précitée, caractérisé en ce que les premiers et deuxièmes moyens élastiques (N,O) sont des moyens élastiques précontraints.

2. Dispositif selon la revendication 1, caractérisé en ce que les moyens élastiques précités (N,O) sont déterminés pour que les efforts qu'ils exercent sur le tiroir (t) s'équilibrent lorsque les seconds (O) ont été déformés suite au passage du levier de manoeuvre (2) de la position de référence à la position intermédiaire et les premiers (N) suite à l'action correspondante des moyens de détection.

3. Dispositif selon l'une quelconque des revendications 1 et 2, caractérisé en ce que les premiers et seconds moyens élastiques (N,O) sont respectivement deux ressorts hélicoïdaux (3, 4) à extrémités croisées (3a, 3b ; 4a, 4b).

4. Dispositif selon la revendication 3, caractérisé en ce que les ressorts (3, 4) sont précontraints de façon que les deux extrémités (3a, 3b) et (4a, 4b) de chaque ressort (3, 4) tendent à se rapprocher l'une de l'autre.

5. Dispositif selon l'une quelconque des revendications 3 et 4, caractérisé en ce que les deux ressorts précités (3, 4) sont montés respectivement sur deux leviers (5, 6) pivotant autour de l'axe (X, Y) de leur partie hélicoïdale, leurs extrémités (3a, 3b) et (4a, 4b) étant en appui sur des rebords (5a, 5b ; 6a, 6b) prévus sur les leviers correspondants (5, 6) et les deux commandes respectivement automatique et manuelle agissant directement ou indirectement sur ces leviers (5, 6).

6. Dispositif selon la revendication 5, caractérisé en ce que les deux extrémités de l'un au moins des ressorts précités (3, 4) sont également en appui sur deux rebords (7a, 7b) prévus sur un embout (7) solidaire du tiroir (t) du correcteur (1).

7. Dispositif selon l'une quelconque des revendications 3 à 6, caractérisé en ce que l'une au moins des commandes manuelle et automatique agit sur une pièce (8 ou 5) présentant deux rebords (8a, 8b ou 5a, 5b) sur lesquels s'appuient les extrémités du ressort correspondant (3, 4).

8. Dispositif selon la revendication 7, caractérisé en ce que la pièce (8) sur laquelle agit la commande manuelle se trouve à l'extrémité d'une tige de commande (9) actionnée par le levier de manoeuvre (2).

9. Dispositif selon l'une quelconque des revendications 6 à 8, caractérisé en ce que l'un au moins des leviers de commande manuelle et automatique (5, 6) comporte un doigt (10) pénétrant dans une échancrure (11) ménagée sur l'embout (7) du tiroir (t).

10. Dispositif selon la revendication 9, caractérisé en ce que le levier de commande manuelle (6) comportant le doigt précité (10), ladite échancrure (11) a une longueur suffisante pour que la commande automatique ne soit pas gênée par la commande manuelle lorsque celle-ci est dans la position correspondant à la hauteur de référence du véhicule.

11. Dispositif selon l'une quelconque des revendications 9 et 10, caractérisé en ce que les rebords (7a, 7b) sur lesquels s'appuient les extrémités (3a, 3b) du ressort (3) de la commande automatique se trouvent de part et d'autre de ladite échancrure (11).

12. Dispositif selon l'une quelconque des revendications précédentes, caractérisé en ce que les ensembles constitués par chaque ressort (3, 4) et son levier associé (5, 6) sont disposés perpendiculairement l'un à l'autre.

13. Dispositif selon l'une quelconque des revendications précédentes, caractérisé en ce que le levier de manoeuvre (2) comprend une tige (12) montée pivotante sur un support (13) présentant des échancrures (14), ladite tige de commande (9) étant fixée à l'une des extrémités de cette tige (12) et s'étendant perpendiculairement à son axe de rotation (Z), une poignée (15) montée coulissante à l'autre extrémité de cette tige (12), et des moyens de rappel de la poignée (15) vers le fond des échancrures (14).

## Claims

1. Device for the automatic and manual control of the height for an axle of an automotive vehicle with a hydropneumatic suspension or the like, of the kind comprising a hydraulic height corrector (1) with a spool (t), means for sensing the height of the axle acting upon the spool through the medium of first elastic means (N), these detection means constituting the aforesaid automatic control and an operating lever (2) acting upon the spool through the medium of second elastic means (O), this lever constituting the aforesaid manual control, characterized in that the first and second elastic means (N, O) are prestressed elastic means.

2. Device according to claim 1, characterized in that the aforesaid elastic means (N, O) are determined in order that the forces they exert upon the spool (t) are balancing when the second ones (O) have been deformed upon the passage of the operating lever (2) from the reference position to the intermediate position and the first ones (N) have been deformed upon the corresponding action of the detection means.

3. Device according to any one of claims 1 and 2, characterized in that the first and second elastic means (N, O) are two helical springs (3, 4), respectively, with crossed ends (3a, 3b; 4a, 4b).

4. Device according to claim 3, characterized in that the springs (3, 4) are prestressed so that both ends (3a, 3b) and (4a, 4b) of each spring (3, 4) tend to move towards each other.

5. Device according to any one of the claims 3 and 4, characterized in that both aforesaid springs (3, 4) are mounted onto two levers (5, 6), respectively, pivoting about the axis (X, Y) of their helical portion, their ends, (3a, 3b) and (4a, 4b) bearing upon ledges (5a, 5b; 6a, 6b) provided on the corresponding levers (5, 6) and the two automatic and manual controls, respectively, acting directly or indirectly upon these levers (5, 6).

6. Device according to claim 5, characterized in that both ends of at least one of the aforesaid springs (3, 4) are also bearing upon two ledges (7a, 7b) provided on an end part (7) made fast to the spool (t) of the corrector (1).

7. Device according to any one of claims 3 to 6, characterized in that at least one of the manual and automatic controls acts upon one part (8 or 5) comprising two ledges (8a, 8b or 5a, 5b) upon which are bearing the ends of the corresponding spring (3, 4).

8. Device according to claim 7, characterized in that the part (8) upon which acts the manual control is located at the end of a control rod (9) actuated by the operating lever (2).

9. Device according to any one of claims 6 to 8, characterized in that at least one of the manual and automatic operating levers (5, 6) comprises a finger (10) projecting into a notch (11) formed on the end part (7) of the spool (t).

10. Device according to claim 9, characterized in that the manual operating lever (6) comprises the aforesaid finger (10), the said notch (11) has a sufficient length in order that the automatic control be not impeded by the manual control when the latter is in the position corresponding to the reference height of the vehicle.

11. Device according to any one of claims 9 and 10, characterized in that the ledges (7a, 7b) upon which are bearing the ends (3a, 3b) of the spring (3) of the automatic control are lying on either side of the said notch (11).

12. Device according to any one of the foregoing claims, characterized in that the assemblies consisting of each spring (3, 4) and its associated lever (5, 6) are disposed in perpendicular relation to each other.

13. Device according to any one of the foregoing claims, characterized in that the operating lever (2) comprises a rod (12) pivotally mounted onto a support (13) exhibiting notches (14), the said control rod (9) being fastened to one of the ends of this rod (12) and extending in perpendicular relation to its axis of rotation (Z), a handle (15) slidably mounted at the other end of this rod (12) and means for returning the handle (15) towards the bottom of the notches (14).

## Patentansprüche

1. Vorrichtung zur selbsttätigen und handbetätigten Verstellung für eine Radachse eines Kraftfahrzeuges mit hydropneumatischer Aufhängung oder dergleichen, derjenigen Gattung mit einem hydraulischen Höhenentzerrer (1) mit einem Schieber (t), auf den Schieber über erste elastische Mittel (N) einwirkenden Mitteln zur Erfassung der Höhe der Radachse, wobei diese Erfassungsmittel die vorgenannte automatische Steuervorrichtung bilden, und einem auf den Schieber über zweite elastische Mittel (O) einwirkenden Betätigungshebel (2), wobei dieser Hebel die vorgenannte handbetätigte Steuerung bildet, dadurch gekennzeichnet, dass die ersten und zweiten elastischen Mittel (N, O) vorgespannte elastische Mittel sind.

2. Vorrichtung nach Anspruch 1, dadurch gekennzeichnet, dass die vorgenannten elastischen Mittel (H, O) bestimmt sind, damit die Kräfte, die sie auf den Schieber (t) ausüben, sich ausgleichen, wenn die zweiten Mittel (O) beim Übergang des Betätigungshebels (2) von der Bezugsstellung auf die Zwischenstellung und die ersten Mittel (N) nach der entsprechenden Einwirkung der Erfassungsmittel verformt worden sind.

3. Vorrichtung nach irgendeinem der Ansprüche 1 und 2, dadurch gekennzeichnet, dass die ersten und zweiten elastischen Mittel (N, O) jeweils zwei Wendelfedern (3,4) mit gekreuzten Enden (3a, 3b; 4a, 4b) sind.

4. Vorrichtung nach Anspruch 3, dadurch gekennzeichnet, dass die Federn (3, 4) derart vorgespannt sind, dass die beiden Enden (3a, 3b) und (4a, 4b) jeder Feder (3, 4) dazu neigen, sich einander zu nähern.

5. Vorrichtung nach irgendeinem der Ansprüche 3 und 4, dadurch gekennzeichnet, dass die vorgenannten beiden Federn (3, 4) jeweils an zwei um die Achse (X, Y) deren wendelförmigen Teiles schwenkbaren Hebeln (5, 6) angeordnet sind, wobei die Enden (3a, 3b) und (4a, 4b) sich an an den entsprechenden Hebeln (5, 6) vorgesehenen Randleisten (5a, 5b; 6a, 6b) abstützen und die jeweils automatische und handbetätigte Steuerung unmittelbar oder mittelbar auf diese Hebel (5, 6) einwirken.

6. Vorrichtung nach Anspruch 5, dadurch gekennzeichnet, dass die beiden Enden wenigstens einer der vorgenannten Federn (3, 4) sich ebenfalls an zwei an einem mit dem Schieber (t) des Entzerrers (1) fest verbundenen Endstück (7) vorgesehenen Randleisten (7a, 7b) abstützen.

7. Vorrichtung nach irgendeinem der Ansprüche 3 bis 6, dadurch gekennzeichnet, dass wenigstens die eine der handbetätigten und selbsttätigen Steuerungen auf ein zwei Randleisten (8a, 8b oder 5a, 5b) aufweisendes Stück (8 oder 5), an welchen sich die Enden der entsprechenden Feder (3, 4) abstützen, einwirkt.

8. Vorrichtung nach Anspruch 7, dadurch gekennzeichnet, dass das Stück (8), auf welches die handbetätigte Steuerung einwirkt, sich an dem Ende einer durch den Betätigungshebel (2) betätigten Steuerstange (9) befindet.

9. Vorrichtung nach irgendeinem der Ansprüche 6 bis 8, dadurch gekennzeichnet, dass wenigstens der eine der handbetätigten und selbsttätigen Steuerhebel (5, 6) einen in eine an dem Endstück (7) des Schiebers (t) gebildeten Kerbe (11) eingreifenden Finger (10) aufweist.

10. Vorrichtung nach Anspruch 9, dadurch gekennzeichnet, dass, wenn der handbetätigte Steuerhebel (6) den vorgenannten Finger (10) aufweist, die besagte Kerbe (11) eine genügende Länge hat, damit die selbsttätige Steuerung nicht durch die handbetätigte Steuerung behindert wird, wenn die letztere in der der Bezugshöhe des Fahrzeuges entsprechenden Stellung ist.

11. Vorrichtung nach irgendeinem der Ansprüche 9 und 10, dadurch gekennzeichnet, dass die Randleisten (7a, 7b), auf welchen sich die Enden (3a, 3b) der Feder (3) der automatischen Steuerung abstützen, sich beiderseits der besagten Kerbe (11) befinden.

12. Vorrichtung nach irgendeinem der vorangehenden Ansprüche, dadurch gekennzeichnet, dass die durch jede Feder (3, 4) und ihren zugeordneten Hebel (5, 6) gebildeten Gesamtheiten senkrecht zueinander angeordnet sind.

13. Vorrichtung nach irgendeinem der vorangehenden Ansprüche, dadurch gekennzeichnet, dass der Betätigungshebel (2) eine an einem Ausschnitte (14) aufweisenden Halter (13) schwenkbar angeordnete Stange (12), wobei die besagte Steuerstange (9) an dem einen der Enden dieser Stange (12) befestigt ist und sich senkrecht zu ihrer Drehachse (Z) erstreckt, einen an dem anderen Ende dieser Stange (12) gleitbar angeordneten Handgriff (15) und Mittel zur Rückstellung des Handgriffes (15) zum Boden der Ausschnitte (14) hin, umfasst.
